Europäisches Patentamt

(19) European Patent Office

Office européen des brevets

(11) Publication number: **0 228 818**
**B1**

(12) **EUROPEAN PATENT SPECIFICATION**

(45) Date of publication of patent specification: **23.05.90**

(21) Application number: **86309314.2**

(22) Date of filing: **28.11.86**

(51) Int. Cl.⁵: **B 32 B 27/32, C 08 L 23/10**

(54) Polyethylene blends, films and articles of packaging made therefrom.

(30) Priority: **29.11.85 US 802909**

(43) Date of publication of application:
**15.07.87 Bulletin 87/29**

(45) Publication of the grant of the patent:
**23.05.90 Bulletin 90/21**

(84) Designated Contracting States:
**AT BE CH DE ES FR GB GR IT LI LU NL SE**

(56) References cited:
**EP-A-0 145 945**
**EP-A-0 229 475**
**EP-A-0 230 114**

(73) Proprietor: **AMERICAN NATIONAL CAN COMPANY**
**8770 West Bryn Mawr Avenue**
**Chicago, Illinois 60631 (US)**

(72) Inventor: **Kim, Yong Joo**
**1261 Meadow Lane**
**Neenah Wisconsin 54956 (US)**

(74) Representative: **Holdcroft, James Gerald, Dr. et al**
**Graham Watt & Co. Riverhead**
**Sevenoaks Kent TN13 2BN (GB)**

# Description

The present invention relates to polyethylene blends, films and articles of packaging made therefrom.

Polyethylenes in the density range of 0.91 to 0.965, and linear low density polyethylenes (LLDPE) have many fine and desirable properties which make them particularly suitable for many uses. Polyethylene ("PE") as used herein means those polyethylenes, homopolymer and copolymer, which have a density in the range of 0.91 to 0.965, and LLDPE. Many polyethylenes are stiff, rigid and able to hold shape in thick sections. PE is readily processed and formed in both the solid form and the more fluid plasticated form. It is relatively economical for many uses. In packaging applications it has been found to provide a good barrier to transmission of water vapor. Our particular interest is in the use of PE for packaging applications, but other applications may abound.

Particularly where a flexible packaging is required, the stiffness or rigidity of PE, especially in the density range of 0.94 to 0.96, which is desirable for many structural shapes, is sometimes a didsadvantage.

The Applicants' companion applications EP—A—0 229 475 and EP—A—0 230 114 filed of even date herewith disclose and claim technically related subject matters.

EP—A—0 229 475 has claims directed to a multiple layer film including first and second layers adhered one to the other, the first layer being a blend of (i) a polypropylene (ii) an ethylene-based copolymer and a Modifier, and the second layer being a blend including a Modifier, characterised in that the second layer is a blend of polyethylene and a Modifier and in that the Modifier of the first layer has a composition different from the ethylene based copolymer (EBC).

EP—A—0 230 114 has claims directed to a multiple layer film, comprising:

(a) a first layer, the composition of which is a blend of (i) a polymer chosen from polypropylene homopolymer and polypropylene copolymer and (ii) a Modifier; and

(b) a second layer adhered to said first layer, the composition of the second layer being a blend of (i) polyethylene and (ii) a Modifier, wherein the polyethylene of the second layer is high density polyethylene.

The subject matter of each of these companion applications is hereby disclaimed from the ambit of the claims appended hereto.

It is known from EP—A—0 145 945 to make a plural layer film including a layer made from a blend of high density polyethylene, linear low density polyethylene and a diene copolymer rubber, but neither of the first two components (HDPE and LLDPE) are such as possess elastomeric properties.

Starting from EP—A—0 145 945, it is an object of this invention to devise a PE blend which is more flexible, or will act more flexibly than previous PE materials particularly when it is fabricated into thin section films. Thicker sections will also find some applications, once the properties of the new material are known.

It is another object of this invention to develop such a composition which is adapted to be extruded to produce a film.

One embodiment of the invention is seen in a family of novel polymeric blends of PE, a second component compatible with PE in the blend composition and a third component which possesses elastomeric properties. The second component is an ethylene based copolymer which has elastomeric properties and consists of ethylene copolymerized with moieties of a second molecule, the latter being butene-1. The third component may be an elastomer selected from ethylene propylene copolymer, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

Further components can be added for special purposes, as will be apparent from the following description.

Claims are directed to polymeric blends which can be in the form of a layer, multiple layer films, polymeric packaging articles, polymeric films made from such polymeric blends, and a method of making a packaging film.

Whilst, in principle, the second component could be prepared from ethylene and butene-1 combined in any proportion, we disclaim protection for any PE blend containing as the second component those copolymers wherein the mole percent of ethylene is 80 or less and wherein the mole percent of butene-1 is 5 or less. In practising this invention, the second component therefore comprises 81 to 94 mole % ethylene and 19 to 6 mole % of butene-1, preferably 86 to 94 mole % and 14 to 6 mole % respectively. Use of such a second component in the PE blend yields a composition that is particularly well adapted for packaging applications.

According to the invention, there is provided a polymeric blend comprising a first component of polyethylene, a second component comprising an ethylene butene-1 copolymer, and a third component, different from said first and second components, characterised in that the ethylene butene-1 copolymer has a content of 81 to 94 mole percent ethylene and 19 to 6 mole percent butene-1, and both the second and third components have elastomeric properties.

Also according to the invention, the third component is selected from an ethylene propylene copolymer, polybutylene, polyisobutylene, ethylene propylene diene-monomer terpolymer, styrene butadiene styrene block copolymer (SBS), styrene-ethylene/butylene-styrene block copolymer (SEBS), styrene isoprene styrene block copolymer (SIS), polybutene-1, and isobutylene isoprene copolymer.

Preferably according to the invention the first component is present in the blend in an amount of from 60% to 90%, the second component in an amount of from 5% to 40%, and the third component in an amount of from 5% to 30%, the percentages being by weight of the blend.

More preferably the first component is present in the blend in an amount of from 65% to 80% by weight, and the second component in an amount of from 5% to 35% by weight of the blend.

Preferably, the second component comprises a copolymer of 86 to 94 mole percent ethylene and 14 to 6 mole percent butene-1.

Embodiments of the invention will now be explained in more detail by way of example only in the description which now follows.

Polymeric blends may broadly comprise 50 to 95% by weight of a first component (PE), 2 to 50% by weight of ethylene butene-1 copolymer as a second component and the third component which is present in an amount of e.g. 2 to 50% by weight.

The second component may be present in an amount of 10% or preferably 20% by weight. The third component may be present in the same amount.

The blends according to this invention are readily molded by conventional methods into a variety of shapes and articles. Preferred uses are in films molded, as by extrusive processes, for use in packaging of various goods of commerce.

The terms "elastomer" and "elastomeric" describe polymers, copolymers and rubbers which at room temperature can be stretched substantially under low stress and, upon immediate release of the stress, have the tendency to return generally to the original shape.

Any of the PE polymers, including copolymers, are suitable for use in the invention. Typical weight average molecular weight of PE is 20,000 to 400,000. Melt indices are 0.2 to 20, melt index values being determined according to ASTM Test D-1238. Typical melting point temperatures are 80° to 143°C (176°F to 290°F) and typical extrusion processing temperatures are 149° to 288°C (300°F to 550°F) preferably 193 to 232°C (350°F to 450°F).

"Compatible" means the capability for polymers to be extruded in blend composition.

An exemplary commercially available ethylene butene-1 copolymer is that sold as TAFMER® A by Mitsui Petrochemical Industries, Ltd. As indicated in this manufacturer's literature, TAFMER® A exhibits the property of rubber elasticity.

A high fraction of PE, such as 60% to 90% serves to contribute good barrier to transmission of moisture vapor. Similarly the overall amount of each of the second and the third components is usually within the range of 10% to 40% by weight, thus constituting a significant fraction of the composition. In the most desired compositions identified by the applicants, the second component is present in somewhat larger proportion than is the third component.

Typical examples of preferred three component blends are:

50% PE, 30% ethylene butene-1
    copolymer, e.g. TAFMER® A,
20% SEBS;
70% PE, 20% ethylene butene-1
    copolymer e.g. TAFMER® A, 10% SIS

In the present invention, HDPE (high density polyethylenes having a density greater than 0.94) are especially preferred.

With the exception of polyisobutylene and ethylene propylene diene-monomer terpolymer, the elastomers mentioned above are commonly available in pellet form. By special pre-compounding with other polymers these elastomers also may be obtained in pellet form, and same are contemplated for use herein. In one method of making the blends of the invention, pellets of the selected polymers are first thoroughly mixed in solid form in the selected relative amounts, herein illustrated as being by weight. The blended pellets are then melted and preferably further mixed in the melted state. In typical processes which are used to fabricate articles from the blends of the invention, the melted and/or plasticated polymer is forced through an extruder and molded into a desired shape or sheet by a die through which it exits the extrusion process. This highly useful technique is especially advantageous for forming films and film-like structures.

According to the invention a method of making a packaging film comprises blending together:

(a) a first component of polyethylene;

(b) a second component of an ethylene butene-1 copolymer, the latter comprising 81 to 94 mole percent ethylene and 19 to 6 mole percent butene-1 and having elastomeric properties; and

(c) a third component, different from the first and second components, which has elastomeric properties;

and thereafter extruding the blended components through a die and cooling the extrudate to obtain the film, the extrusion step optionally involving coextruding the blended components with at least one other polymeric material for obtaining a multiple layer film structure.

The novel blends of the invention are likewise adaptable for use in other processes for fabricating articles therefrom.

Normal types and amounts of additives and processing aids which are otherwise useful with PE or a selected elastomer, may be used herein.

The films of this invention may be formed into a variety of packages and containers by well-known methods. For example, the films may be slit to a selected size, folded and the open edges heat-sealed to form a pouch for products such as food and liquids and, after the product is placed therein, the open edge is then heat sealed.

Thus the invention provides a novel polymeric blend of PE which has desirable properties of increased resilience and increased capability to withstand shock abuse and, by being adaptable to incorporation into multiple layer films, the blends of the invention can bring benefits to such films.

**Claims for the Contracting States: BE, CH, DE, FR, GB, IT, LI, LU, NL, SE, GR**

1. A polymeric blend comprising a first component of polyethylene, a second component comprising an ethylene butene-1 copolymer, and a third component, different from said first and second components, characterised in that the ethylene butene-1 copolymer has a content of 81 to 94 mole percent ethylene and 19 to 6 mole percent butene-1, and both the second and third components have elastomeric properties.

2. A polymeric blend according to claim 1 wherein the third component is selected from an ethylene propylene copolymer, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

3. A blend according to claims 1 or 2, wherein the first component is 60% to 90%, the second component is 5% to 40% and the third component is 5% to 30%, the percentages being by weight of the blend.

4. A blend according to claim 3, wherein the first component is present in an amount of 65% to 80% of the blend by weight.

5. A blend according to any of claims 1 to 4, wherein the second component is present in an amount of 5% to 35% by weight.

6. A blend according to claims 1 to 5, in the form of a layer.

7. A multiple layer film wherein at least one layer consists of a blend according to any of claims 1 to 5.

8. A polymeric packaging article made from a blend according to claim 6 or a multiple layer film according to claim 7.

**Claims for the Contracting States: AT, ES**

1. A polymeric film made from a polymeric blend comprising a first component of polyethylene and a second component comprising an ethylene butene-1 copolymer and a third component, different from said first and second components, characterised in that the ethylene butene-1 copolymer has a content of 81 to 94 mole percent ethylene and 19 to 6 mole percent butene-1, and both of said second and third components have elastomeric properties.

2. A film according to claim 1, wherein the second component comprises a copolymer of 86 to 94 mole percent ethylene and 14 to 6 mole percent butene-1.

3. A film according to claim 1, wherein the third component is selected from an ethylene propylene copolymer, polybutylene, polyisobutylene, ethylene propylene diene-monomer terpolymer, styrene butadiene styrene block copolymer, styrene-ethylene/butylene-styrene block copolymer, styrene isoprene styrene block copolymer, polybutene-1, and isobutylene isoprene copolymer.

4. A film according to any of claims 1 to 3, wherein the first component is 60% to 90%, the second component is 5% to 40% and the third component is 5% to 30%, the percentages being by weight of the blend.

5. A film according to claim 4, wherein the first component is present in an amount of 65% to 80% by weight.

6. A film according to any of claims 1 to 5, wherein the second component is present in an amount of 5% to 35% by weight.

7. A multiple layer film wherein at least one layer consists of a film according to any of claims 1 to 6.

8. A polymeric packaging article made from a film according to any of claims 1 to 7.

9. A method of making a packaging film, comprising blending together:
(a) a first component of polyethylene;
(b) a second component of an ethylene butene-1 copolymer, the ethylene butene-1 copolymer comprising 81 to 94 mole percent ethylene and 19 to 6 mole percent butene-1 and having elastomeric properties; and
(c) a third component, different from the first and second components, which has elastomeric properties;
and thereafter extruding the blended components through a die and cooling the extrudate to obtain the film, the extrusion step optionally involving coextruding the blended components with at least one other polymeric material for obtaining a plural layer film structure.

**Patentansprüche für die Vertragsstaaten: BE, CH, DE, FR, GB, GR, IT, LI, LU, NL, SE**

1. Eine polymere Mischung, die einen ersten Bestandteil aus Polyäthylen, einen zweiten Bestandteil, der ein Äthylen-Buten-1-Copolymer umfaßt, und eine dritte Komponente, die von der ersten und der zweiten Komponente verschieden ist, umfaßt, dadurch gekennzeichnet, daß das Äthylen-Buten-1-Copolymer einen Gehalt von 81 bis 94 Mol-% Äthylen und 19 bis 6 Mol-% Buten-1 besitzt und sowohl der zweite als auch der dritte Bestandteil elastomere Eigenschaften aufweist.

2. Eine polymere Mischung nach Anspruch 1, bei der der dritte Bestandteil aus einem Äthylen-Propylen-Copolymer, Polybutylen, Polyisobutylen, Äthylen-Propylen-Dien-Monomer-Terpolymer, Styrol-Butadien-Styrol-Blockcopolymer, Styrol-Äthylen/Butylen-Styrol-Blockcopolymer, Styrol-Isopren-Styrol-Blockcopolymer, Polybuten-1 und Isobutylen-Isopren-Copolymer ausgewählt ist.

3. Eine Mischung nach Anspruch 1 oder 2, bei der der erste Bestandteil 60% bis 90% beträgt, der zweite Bestandteil 5% bis 40% beträgt und der dritte Bestandteil 5% bis 30% beträgt, wobei die Prozentsätze auf das Gewicht der Mischung bezogen sind.

4. Eine Mischung nach Anspruch 3, bei der der erste Bestandteil in einer Menge von 65% bis 80% der Mischung, bezogen auf das Gewicht, vorhanden ist.

5. Eine Mischung nach einem der Ansprüche 1 bis 4, bei der der zweite Bestandteil in einer Menge von 5% bis 35%, bezogen auf das Gewicht, vorhanden ist.

6. Eine Mischung nach den Ansprüchen 1 bis 5 in der Form einer Schicht.

7. Eine Mehrschichtenfolie, bei der wenigstens eine Schicht aus einer Mischung gemäß einem der Ansprüche 1 bis 5 besteht.

8. Ein polymerer Verpackungsgegenstand, der aus einer Mischung gemäß Anspruch 6 oder einer Mehrschichtenfolie gemäß Anspruch 7 hergestellt ist.

**Patentansprüche für die Vertragsstaaten: AT, ES**

1. Eine polymere Folie, die aus einer polymeren Mischung hergestellt ist, die einen ersten Bestandteil aus Polyäthylen und einen zweiten Bestandteil, der ein Äthylen-Buten-1-Copolymer umfaßt, und einen dritten Bestandteil, der von dem ersten und von dem zweiten Bestandteil verschieden ist, umfaßt, dadurch gekennzeichnet, daß das Äthylen-Buten-1-Copolymer einen Gehalt von 81 bis 94 Mol-% Äthylen und 19 bis 6 Mol-% Buten-1 besitzt und sowohl der zweite als auch der dritte Bestandteil elastomere Eigenschaften aufweist.

2. Eine Folie nach Anspruch 1, bei der der zweite Bestandteil ein Copolymer mit 86 bis 94 Mol-% Äthylen und 14 bis 6 Mol-% Buten-1 umfaßt.

3. Eine Folie nach Anspruch 1, bei der der dritte Bestandteil aus einem Äthylen-Propylen-Copolymer, Polybutylen, Polyisobutylen, Äthylen-Propylen-Dien-Monomer-Terpolymer, Styrol-Butadien-Styrol-Blockcopolymer, Styrol-Äthylen/Butylen-Styrol-Blockcopolymer, Styrol-Isopren-Styrol-Blockcopolymer, Polybuten-1 und Isobutylen-Isopren-Copolymer ausgewählt ist.

4. Eine Folie nach einem der Ansprüche 1 bis 3, bei der der erste Bestandteil 60% bis 90% beträgt, der zweite Bestandteil 5% bis 40% beträgt und der dritte Bestandteil 5% bis 30% beträgt, wobei die Prozentsätze auf das Gewicht der Mischung bezogen sind.

5. Eine Folie nach Anspruch 4, bei der der erste Bestandteil in einer Menge von 65% bis 80%, bezogen auf das Gewicht, vorhanden ist.

6. Eine Folie nach einem der Ansprüche 1 bis 5, bei der der zweite Bestandteil in einer Menge von 5% bis 35%, bezogen auf das Gewicht, vorhanden ist.

7. Eine Mehrschichtenfolie, bei der wenigstens eine Schicht aus einer Folie gemäß einem der Ansprüche 1 bis 6 besteht.

8. Ein polymerer Verpackungsgegenstand, der aus einer Folie gemäß einem der Ansprüche 1 bis 7 hergestellt ist.

9. Verfahren zum Herstellen einer Verpackungsfolie, die das Zusammenmischen von:

(a) einem ersten Bestandteil aus Polyäthylen;

(b) einem zweiten Bestandteil aus einem Äthylen-Buten-1-Copolymer, wobei das Äthylen-Buten-1-Copolymer 81 bis 94 Mol-% Äthylen und 19 bis 6 Mol-% Buten-1 umfaßt und elastomere Eigenschaften aufweist, und

(c) einem dritten Bestandteil, der von dem ersten und von dem zweiten Bestandteil verschieden ist und elastomere Eigenschaften aufweist,

und nachfolgendes Extrudieren der gemischten Bestandteile durch eine Form und Abkühlen des Extrudats, um die Folie zu erhalten, umfaßt, wobei der Extrusionsverfahrensschritt wahlweise das gleichzeitige Extrudieren (Coextrudieren) der gemischten Bestandteile mit wenigstens einem anderen polymeren Material zum Erhalten eines mehrschichtigen Folienaufbaus umfaßt.

**Revendications pour les Etats Contractants: BE, CH, DE, FR, GB, GR, IT, LI, LU, NL, SE**

1. Mélange polymère, comprenant un premier composant constitué par un polyéthylène, un deuxième composant constitué par un copolymère éthylène/butène-1 et un troisième composant différent du premier et du deuxième composants, caractérisé en ce que le copolymère éthylène/butène-1 a une teneur de 81 à 94% en moles d'éthylène et de 19 à 6% en moles de butène-1, et en ce que le deuxième et le troisième composants ont tous deux des propriétés d'élastomère.

2. Mélange polymère selon la revendication 1, dans lequel le troisième composant est choisi parmi un copolymère éthylène/propylène, un polybutylène, un polyisobutylène, un terpolymère éthylène/propylène/diène monomère, un copolymère séquencé styrène/butadiène/styrène, un copolymère séquencé styrène-éthylène/butylène-styrène, un copolymère séquencé styrène/isoprène/styrène, un polybutène-1 et un copolymère isobutylène/isoprène.

3. Mélange selon la revendication 1 ou 2, dans lequel le premier composant est présent dans une proportion de 60% à 90%, le deuxième composant dans une proportion de 5% à 40% et le troisième composant dans une proportion de 5% à 30%, ces pourcentages étant des pourcentages en poids sur la base du mélange.

4. Mélange selon la revendication 3, dans lequel le premier composant est présent dans une proportion de 65% à 80% en poids sur la base du mélange.

5. Mélange selon l'une quelconque des revendications 1 à 4, dans lequel le deuxième composant est présent dans une proportion de 5% à 35% en poids.

6. Mélange selon l'une quelconque des revendications 1 à 5 sous la forme d'une couche.

7. Film multicouches, dans lequel une couche au moins est faite d'un mélange selon l'une quelconque des revendications 1 à 5.

8. Article d'emballage polymère, fabriqué à partir d'un mélange selon la revendication 6 ou d'un film multicouches selon la revendication 7.

**Revendications pour les Etats Contractants: AT, ES**

1. Film polymère, fait d'un mélange polymère comprenant un premier composant constitué par un polyéthylène, un deuxième composant constitué par un copolymère éthylène/butène-1 et un troisième composant différent du premier et du deuxième composants, caractérisé en ce que le copolymère éthylène/butène-1 a une teneur de 81 à 94% en moles d'éthylène et de 19 à 6% en moles de butène-1, et en ce que le deuxième et le troisième composants ont tous deux des propriétés d'élastomère.

2. Film selon la revendication 1, dans lequel le deuxième composant est constitué par un copolymère de 86 à 95% en moles d'éthylène et de 14 à 6% en moles de butène-1.

3. Film selon la revendication 1, dans lequel le troisième composant est choisi parmi un copolymère éthylène/propylène, un polybutylène, un polyisobutylène, un terpolymère éthylène/propylène/diène monomère, un copolymère séquencé styrène/butadiène/styrène, un copolymère séquencé styrène-éthylène/butylène-styrène, un copolymère séquencé styrène/isoprène/styrène, un polybutène-1 et un copolymère isobutylène/isoprène.

4. Film selon l'une quelconque des revendications 1 à 3, dans lequel le premier composant est présent dans une proportion de 60% à 90%, le deuxième composant dans une proportion de 5% à 40% et le troisième composant dans une proportion de 5% à 30%, ces pourcentages étant des pourcentages en poids sur la base du mélange.

5. Mélange selon la revendication 4, dans lequel le premier composant est présent dans une proportion de 65% à 80% en poids.

6. Film selon l'une quelconque des revendications 1 à 5, dans lequel le deuxième composant est présent dans une proportion de 5% à 35% en poids.

7. Film multicouches, dans lequel une couche au moins est faite d'un film selon l'une quelconque des revendications 1 à 6.

8. Article d'emballage polymère, fabriqué à partir d'un film selon l'une quelconque des revendications 1 à 7.

9. Procédé de fabrication d'un film d'emballage, consistant à mélanger ensemble:

(a) un premier composant constitué par un polyéthylène;

(b) un deuxième composant constitué par un copolymère éthylène/butène-1, le copolymère éthylène/butène-1 comprenant de 81 à 94% en moles d'éthylène et de 19 à 6% en moles de butène-1 et ayant des propriétés d'élastomère; et

(c) un troisième composant, différent du premier et du deuxième composants et ayant des propriétés d'élastomère;

puis à extruder les composants mélangés à travers une filière et à refroidir l'extrudat pour obtenir le film, l'étape d'extrusion comprenant facultativement une coextrusion des composants mélangés avec au moins une autre matière polymère pour obtenir une structure de film multicouches.